**Europäisches Patentamt**

**European Patent Office**

**Office européen des brevets**

(19)

(11) Publication number : **0 234 635**
**B1**

## EUROPEAN PATENT SPECIFICATION

(12)

(45) Date of publication of patent specification :
28.03.90

(51) Int. Cl.⁵ : **B 65 G   1/02**

(21) Application number : 87200200.1

(22) Date of filing : 10.02.87

(54) Support floor for the storage of coils of strip material.

(30) Priority : 17.02.86 NL 8600389

(43) Date of publication of application :
02.09.87 Bulletin 87/36

(45) Publication of the grant of the patent :
28.03.90 Bulletin 90/13

(84) Designated contracting states :
AT BE CH DE ES FR GB GR IT LI LU NL SE

(56) References cited :
EP--A-- 0 075 975
CA--A-- 1 072 919
US--A-- 2 588 278
US--A-- 4 195 732

(73) Proprietor : HOOGOVENS GROEP B.V.
P.O. Box 10.000
NL-1970 CA IJmuiden (NL)

(72) Inventor : Akkerman, Klaas Ignatius Johannes
Ladderbeekstraat 81
NL-1951 BK Velsen-Noord (NL)
Inventor : Hoekstra, Anne
Middenweg 500 A
NL-1704 BM Heerhugowaard (NL)

(74) Representative : Wentzel, Hendrik Cornelis et al
Hoogovens Groep B.V. P.O. Box 10.000
NL-1970 CA IJmuiden (NL)

## Description

The invention relates to a support floor for the storage of a plurality of coils of coiled strip material, especially metal, such as cold rolled steel, with the axis of the coil generally horizontal.

Such coils are heavy, e. g. 3 to 16 tons or even more, and pose special problems of storage. Examples are coils of untinned, tinned or chromium plated steel sheet and aluminium foil, although the invention is not limited to these.

Cast concrete floors having concavities into which coils of material can be placed are known. In practice it appears that impressions in the coiled material arising from the relief of the floor remain observable many turns deep and these turns are therefore unsuitable for use. Applying a smooth finishing surface, such as an epoxy resin, onto the upper surface of the concavity provides a slight improvement, but this is insufficient.

Apart from the inherent roughness of such a floor, foreign matter that sticks to the upper surface of the concavity may also cause damage to the outermost turns of the coil. These problems are tending to increase in that there is a tendency for higher coil weights with the consequence that there are higher local forces on the points of contact between the surface of the concavity and the coil. For these reasons, such floors require expensive and labour-intensive maintenance.

EP-A-75975 shows a support floor for metal coils formed by a plurality of resiliently deformable elements which when assembled provide rows transverse to the coil axis direction with a regularly repeating hill-and-valley profile which consists of narrow upward ridges and flat sloping regions extending down from the ridges to horizontal bottom regions. Each element has such a ridge at its centre and a half of one such horizontal region at each end. In the coil axis direction, the elements are short, compared with their length in the transverse direction.

CA-A-1072919 shows a pallet for a steel coil which has at each end a segmental concave support surface for the coil. Steel or hardwood is used for the construction of the pallet.

The object of the invention is to provide a support floor for the storage of heavy coils in which the problems stated above are overcome or greatly diminished, and in which more uniform support is provided than in the prior art mentioned.

According to the invention there is provided support floor for the storage of a plurality of coils of strip material with the coil axis of each coil generally horizontal, the floor comprising a plurality of floor elements which provide concavities extending longitudinally in the coil axis direction in which concavities the coils lie, the floor elements being resiliently deformable under the coil weight characterised in that the floor elements are made from low-density polyethylene and each floor element (3) provides the whole transverse extent of the or each concavity (5) formed in it and has a flat horizontal upper surface region (7) at each side of the concavity joining the concavity to the adjacent part (4) of the floor surface and wherein the concavities (5) extend over the whole length of the floor elements in the coil axis direction and in that the elements are arranged in one or more rows with their concavities aligned with each other in the or each row to provide a continuous surface for the coils.

Preferably each concavity, as seen in transverse cross-section, is substantially continuously curved and has smooth convex transitions at each side edge to said flat horizontal upper surface regions and preferably each concavity is, as seen in transverse cross-section, of generally segmental shape.

In order to provide support over the whole length of the coil, and thus lower load per unit area of contact, the concavities of the floor according to the invention extend over the whole length of the floor elements in the coil axis direction and the elements are arranged in one or more rows with their concavities aligned with each other in the or each row to provide a continuous surface for the coils.

The advantage of a floor according to the invention is that the concavities can be smooth and provide large contact areas so that they themselves do not exert an impression upon the coil, while because of the resilient properties of the material used any foreign material is pressed into the floor element, and therefore causes no or only small impressions in the turns of the coil.

A further reduction of damage caused by dirt is achieved according to another preferred feature of the invention by providing the concavity at its lowest part with a groove extending longitudinally into which loose dirt can collect, to avoid damaging the coils.

Damage to the coil through dirt can be further limited as, because of the deformability of the material from which the elements are made, the coil is supported over a greater area than in the prior art so that high local forces are avoided or reduced.

The coil support of the invention especially with a segmental shaped concavity prevents or reduces permanent deformation of the outermost turns of the coil at the places where the coil is supported in the concavity.

A further advantage obtainable with the floor according to the invention is ease of maintenance. Because of the smooth top surface of the concavity, this surface is simple to inspect and clean. Repairs to damaged places in the concavities can be carried out quickly when the concavities are formed in exchangeable elements.

In practice a plastics material such as low density polyethylene, for example, appears to be a suitable material for making the elements. The material used need not be virgin, but may be recycled plastics.

Mutual movement of the elements with respect to one another is limited if the floor is provided with a flat layer of mortar on which the elements rest. At the same time the elements may be coupled to one another, e.g. using pegs and peg-holes, to reduce mutual movement still further.

Preferably the part of the floor adjacent to the elements on at least one side is made from steel-fibre reinforced concrete to obtain adequate connection and thereby the mechanical strength required to withstand the load imposed by coil transport vehicles which travel over the floor to place or remove coils.

The invention extends to such a support floor having coils stored thereon.

One embodiment of the invention will be described below as a non-limitative example with reference to the drawings, in which:

Fig. 1 shows in cross section a support floor according to the invention carrying a coil;

Fig. 2 shows in perspective how the floor elements of Fig. 1 lie with respect to one another;

Fig. 3 is a front view of a floor element of the floor of Fig. 1; and

Fig. 4 is a side view of the floor element of Fig. 3.

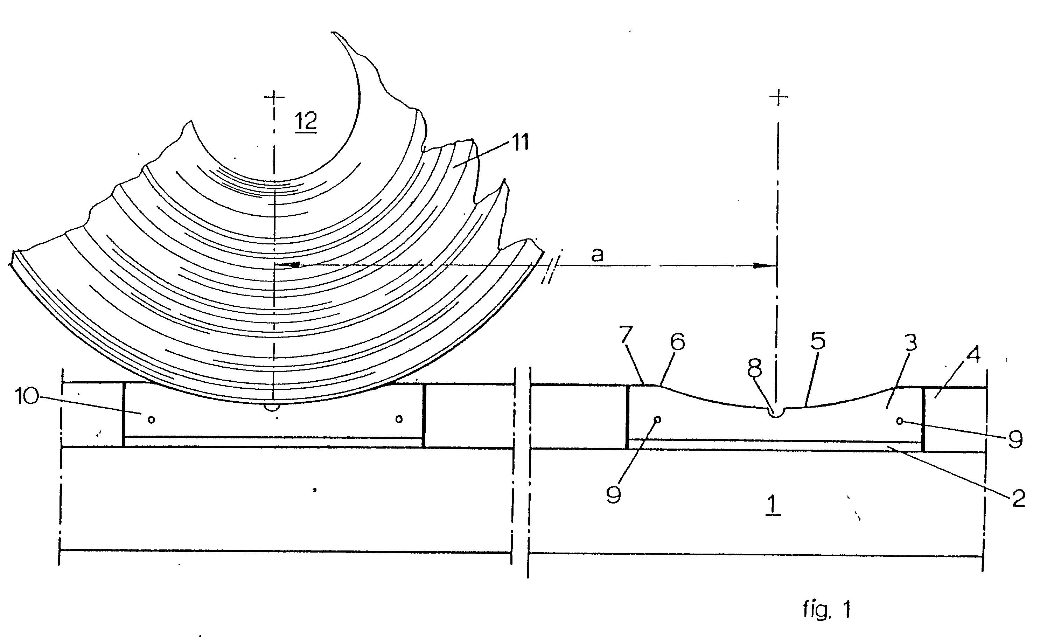

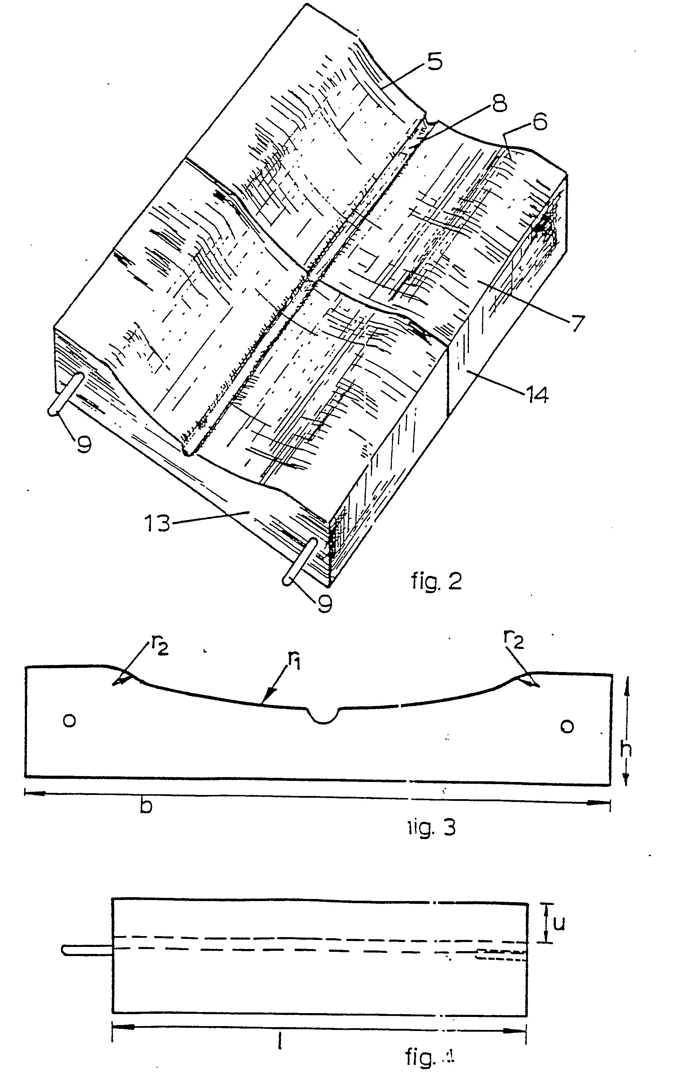

In Fig. 1 there is shown a concrete base floor 1 to which at certain regions flat layers 2 of mortar are applied. Floor elements 3 are laid on these layers 2. On either side of each floor element 3, the base floor 1 is covered by a kerb 4 made of steel-fibre reinforced concrete which provides a track or surface suitable to carry the load of coil lifting transporters driving over it. Fig. 2 shows that the elements 3 are aligned and abutting end-to-end in longitudinal rows which present a continuous concavity for the coils. Two such elements 13, 14 are shown in this figure.

Each floor element 3 has a generally segmental cross-section smoothly curving concavity 5 whose defining chord lies in the same horizontal plane as the upper surface of the kerb region 4 on each side. At each side the segmental concavity passes gradually via a convex rounding 6 into the horizontal surface strip 7 of the element 3 which adjoins the upper surface of the kerb block. The lowest part of the concavity 5 has a groove 8 extending longitudinally in which loose dirt may collect. To limit mutual movement of elements 3 pegs 9 and peg-holes are used as coupling elements; the pegs 9 fit into matching peg-holes in the longitudinally adjacent element.

Fig. 1 shows a second identical floor element 10, spaced laterally from the element 3, with a coil 11 having central hole 12 placed on it. The centre-to-centre distance between the two parallel concavities is designated $a$ and is chosen so that the coils do not contact each other and that a transporter, by which the coils can be moved, such as a fork lift truck, can deposit a coil without damaging the coils in neighbouring rows.

The elements 3 are made from low density polyethylene.

Fig. 3 shows the front view of a floor element. The radius of curvature $r_1$ of the segmental concavity corresponds to the largest radius of the coils to be stored. The radius of curvature $r_2$ avoids sharp edges at the convex transition from the segmental section to the flat section and is determined experimentally.

In one practical embodiment, the height $h$ of the segment is 130 mm, the width $b$ 700 mm, the length 1 500 mm, the radius $r_1$ 850 mm, the radius $r_2$ 100 mm, the depth of the concavity $u$ 50 mm, the centre-to-centre spacing $a$ between two consecutive concavities 1 900 mm and the thickness of the mortar layer 2 is 20 mm.

Claims

1. Support floor for the storage of a plurality of coils of strip material with the coil axis of each coil generally horizontal, the floor comprising a plurality of floor elements (3) which provide concavities (5) extending longitudinally in the coil axis direction in which concavities the coils lie, the floor elements being resiliently deformable under the coil weight characterised in that the floor elements are made from low density polyethylene and each floor element (3) provides the whole transverse extent of the or each concavity (5) formed in it and has a flat horizontal upper surface region (7) at each side of the concavity joining the concavity to the adjacent part (4) of the floor surface and wherein the concavities (5) extend over the whole length of the floor elements in the coil axis direction and in that the elements are arranged in one or more rows with their concavities aligned with each other in the or each row to provide a continuous surface for the coils.

2. Support floor according to claim 1 wherein each concavity (5), as seen in transverse cross-section, is substantially continuously curved and has smooth convex transitions (6) at each side edge to said flat horizontal upper surface regions (7).

3. Support floor according to claim in or claim 2 wherein each concavity (5) is, as seen in transverse cross-section, of generally segmental shape.

4. Support floor according to any one of the preceding claims wherein each concavity is provided at its lowest part with a groove (8) extending in the coil axis direction.

5. Support floor according to any one of the preceding claims wherein the floor elements are replaceable individually.

6. Support floor according to any one of the preceding claims wherein each floor element rests on a flat layer (2) of mortar.

7. Support floor according to any one of the preceding claims wherein adjacent each element on at least one side is a floor part (4) made from steelfibre reinforced concrete.

8. Floor element (3) for a coil support floor according to any one of the preceding claims formed of low density polyethylene and having, in its face which is uppermost in use, a longitudinally extending concavity (5) and at each side of said concavity a flat surface region (7).

9. Floor element according to claim 8 wherein the concavity (5), as seen in transverse cross-section, is substantially continuously curved and has smooth convex transitions (6) at its side edges to said flat horizontal upper surface regions (7)

Patentansprüche

1. Stützboden zur Lagerung einer Vielzahl von Bandmaterialbunden mit allgemein horizontaler Bundachse jedes Bundes, wobei der Boden eine Vielzahl an Bodenelementen (3) aufweist, welche sich in Längsrichtung der Bundachsenrichtung erstreckende Rundhöhlungen (5) vorsehen, in

welchen Rundhöhlungen die Bunde liegen, wobei die Bodenelemente unter dem Bundgewicht elastisch verformbar sind, dadurch gekennzeichnet, daß die Bodenelemente aus Polyäthylen niedriger Dichte hergestellt sind und daß jedes Bodenelement (3) die gesamte Querausdehnung der oder jeder in ihm geformten Rundhöhlung (5) vorsieht und einen ebenen, horizontalen oberen Flächenbereich (7) an jeder Seite der Rundhöhlung besitzt, welcher die Rundhöhlung mit dem benachbarten Teil (4) der Bodenoberfläche verbindet und wobei sich die Rundhöhlungen (5) über die gesamte Länge der Bodenelemente in Bundachsenrichtung erstrecken und daß die Elemente in einer oder mehreren Reihen mit ihren Rundhöhlungen in der oder jeder Reihe miteinander ausgerichtet angeordnet sind, um eine ununterbrochene Fläche für die Bunde vorzusehen.

2. Stützboden gemäß Anspruch 1, wobei jede Rundhöhlung (5) im Querschnitt gesehen, im wesentlichen ununterbrochen gekrümmt ist und glatte konvexe Übergänge (6) an jedem Seitenrand zu besagten, ebenen, horizontalen, oberen Flächenbereichen (7) besitzt.

3. Stützboden gemäß Anspruch 1 oder Anspruch 2, wobei jede Rundhöhlung (5), im Querschnitt gesehen, von im allgemeinen aus Segmenten gebildeter Gestalt ist.

4. Stützboden gemäß irgendeinem der vorhergehenden Ansprüche, wobei jede Rundhöhlung zumindest an ihrem untersten Teil mit einer, sich in Bundachsenrichtung erstreckenden Rinne (8) versehen ist.

5. Stützboden gemäß irgendeinem der vorhergehenden Ansprüche, wobei die Bodenelemente einzeln austauschbar sind.

6. Stützboden gemäß irgendeinem der vorhergehenden Ansprüche, wobei jedes Bodenelement auf einer ebenen Lage (2) aus Mörtel ruht.

7. Stützboden gemäß irgendeinem der vorhergehenden Ansprüche, wobei zumindest auf einer Seite jedem Element benachbart ein aus stahlfaserverstärktem Beton hergestellter Bodenteil (4) ist.

8. Bodenelement (3) für einen Bund-Stützboden gemäß irgendeinem der vorhergehenden Ansprüche, welches aus Polyäthylen niedriger Dichte geformt ist und in seiner, im Gebrauch obersten Fläche eine sich in Längsrichtung erstreckende Rundhöhlung (5) und an jeder Seite besagter Rundhöhlung einen ebenen Flächenbereich (7) besitzt.

9. Bodenelement gemäß Anspruch 8, wobei jede Rundhöhlung (5), im Querschnitt gesehen, im wesentlichen ununterbrochen gekrümmt ist und glatte konvexe Übergänge (6) an ihren Seitenrändern zu besagten, ebenen, horizontalen, oberen Flächenbereichen (7) besitzt.

**Revendications**

1. Plancher de support pour le stockage d'une pluralité de bobines de matériau de feuilles, l'axe de bobine de chaque bobine étant généralement horizontal, le plancher comportant une pluralité d'éléments (3) de plancher qui procurent des concavités (5) s'étendant longitudinalement dans la direction de l'axe des bobines, dans lesquelles concavités reposent les bobines, les éléments de plancher étant déformables élastiquement sous le poids des bobines, caractérisé en ce que les éléments de plancher sont faits avec du polyéthylène à faible densité et en ce que chaque élément (3) de plancher permet à la concavité (5) ou à chaque concavité formée dans celui-ci de s'étendre sur la totalité de son étendue transversale, et possède une région (7) de surface supérieure horizontale plane de chaque côté de la concavité réunissant la concavité à la partie adjacente (4) de la surface de plancher, et dans lequel les concavités (5) s'étendent sur toute la longueur des éléments de plancher dans la direction de l'axe des bobines et en ce que les éléments sont disposés dans une ou plusieurs rangées avec leurs concavités alignées les unes avec les autres dans la rangée ou dans chaque rangée de façon à procurer une surface continue pour les bobines.

2. Plancher de support selon la revendication 1, dans lequel chaque concavité (5), vue en section transversale, est courbée de façon substantiellement continue et possède des transitions (6) convexes douces sur chaque bord latéral avec lesdites régions (7) de surface supérieure horizontale plane.

3. Plancher de support selon la revendication 1 ou la revendication 2, dans lequel chaque concavité (5) est, vue en coupe transversale, de forme généralement segmentaire.

4. Plancher de support selon l'une quelconque des revendications précédentes, dans lequel chaque concavité est munie dans sa partie inférieure d'une rainure (8) s'étendant dans la direction de l'axe des bobines.

5. Plancher de support selon l'une quelconque des revendications précédentes, dans lequel les éléments de plancher peuvent être remplacés individuellement.

6. Plancher de support selon l'une quelconque des revendications précédentes, dans lequel chaque élément de plancher repose sur une couche plate (2) de mortier.

7. Plancher de support selon l'une quelconque des revendications précédentes, dans lequel au voisinage de chaque élément sur au moins un côté se trouve une partie (4) de plancher faite en béton renforcé par des fibres d'acier.

8. Elément (3) de plancher pour un plancher de support de bobine selon l'une quelconque des revendications précédentes formé de polyéthylène à faible densité et ayant, dans sa face qui est la plus haute lors de l'utilisation, une concavité (5) s'étendant longitudinalement, et, de chaque côté de ladite concavité, une région (7) de surface plane.

9. Elément de plancher selon la revendication 8, dans lequel la concavité (5), vue en section transversale, est substantiellement courbée de façon continue et a des transitions (6) convexes douces à ses bords latéraux vers lesdites régions (7) de surface supérieure horizontale plane.

fíg. 1

EP 0 234 635 B1

fig. 2

fig. 3

fig. 4